# EUROPÄISCHE PATENTSCHRIFT

(11) **EP 2 430 377 B1**
(45) Veröffentlichungstag und Bekanntmachung des Hinweises auf die Patenterteilung: **29.11.2017**
(21) Anmeldenummer: 10721996.6
(22) Anmeldetag: 14.05.2010
(51) Int. Cl.: F24J 2/52, H02S 20/24

(54) **VERFAHREN ZUR MONTAGE EINER ANORDNUNG EINER ANZAHL VON HALTE- UND BEFESTIGUNGSVORRICHTUNGEN**
PROCESS FOR MOUNTING AN ASSEMBLY OF HOLDING AND FASTENING DEVICES
PROCÉDÉ DE MONTAGE D'UN ENSEMBLE DE DISPOSITIFS DE MAINTIEN ET DE FIXATION

(30) Priorität: 15.05.2009 DE 102009021581
(43) Veröffentlichungstag der Anmeldung: 21.03.2012
(73) Patentinhaber: F&F Vermögens GbR, 23730 Neustadt in Holstein (DE)
(72) Erfinder: BABBE, Andreas, 23747 Dahme (DE)
(74) Vertreter: Knoop, Philipp
(86) Internationale Anmeldenummer: PCT/EP2010/002979
(87) Internationale Veröffentlichungsnummer: WO 2010/130461

(56) Entgegenhaltungen:
- EP-A2- 1 267 418
- EP-A2- 1 376 029
- EP-A2- 2 042 822
- WO-A2-2004/063485
- DE-A1-102007 000 697
- DE-U1- 20 120 983
- DE-U1-202007 016 366
- JP-A- 2007 224 538
- US-A1- 2005 217 716
- US-A1- 2009 113 822

## Beschreibung

Die vorliegende Offenbarung betrifft eine Halte- und Befestigungsvorrichtung mit Mitteln zur Halterung mindestens eines Photovoltaikmoduls und/oder Sonnenkollektormoduls in einer zum bestimmungsgemäßen Gebrauch geeigneten Ausrichtung und mit Befestigungsmitteln zur Befestigung einer Dachfläche.

Die vorliegende Erfindung betrifft ein Verfahren zur Montage einer Anordnung einer Anzahl von Halte- und Befestigungsvorrichtungen für mindestens ein Photovoltaikmodul und/oder Sonnenkollektormodul in einer zum bestimmungsgemäßen Gebrauch geeigneten Ausrichtung auf einer Dachfläche mit den Merkmalen des Oberbegriff des Patentanspruchs 1.

Es sind derzeit unterschiedliche Verfahren und Halterungen bekannt, mit denen auch insbesondere auf Flachdächern Photovoltaikanlagen installiert werden. Dabei kommt es jeweils auf eine feste, insbesondere windsichere Halterung der Photovoltaikanlagen oder Sonnenkollektoren auf dem Dach an. So wurde beispielsweise vorgeschlagen, die Halterungen mittels Bohrungen in der Dachfläche zu verankern. Dies hat jedoch den Nachteil, dass die Bohrungen die vorhandene Dachabdichtung, welche typischerweise mittels Bitumenbahnen realisiert wird, an den Bohrungen zerstören. Als Folge daraus können mit Nachteil Undichtigkeiten in der Dachfläche entstehen. Diese Problematik ist insbesondere bei Flachdächern von Bedeutung. Zum anderen wurde, um keine Undichtigkeiten in der Dachfläche zu erzeugen, vorgeschlagen, die Halterungen an den Seitenwänden des Gebäudes, etwa mittels T-Trägern, zu befestigen- Die Methode ist jedoch mit Nachteil sehr kostenintensiv und beeinflusst außerdem das äußere Erscheinungsbild des Gebäudes in häufig unerwünschter Weise.

Schließlich ist es bekannt, die Halterungen mittels Gewichten an der Dachfläche zu befestigen. Dies hat jedoch den Nachteil, dass die Schneelast, die das Dach maximal zu tragen vermag, sich um die Masse der Halterung und dem zu deren Fixierung verwendeten Gewichten vermindert. Wenn das Dach nicht anderweitig zusätzlich verstärkt wird, kann somit mit Nachteil eine kritische Schneelast bereits bei geringer Schneemenge erreicht werden.

Aus der EP 2 042 822 A2 ist ein Solarenergie-Komplettsystem bekannt.

Die DE 20 2007 016 366 U1 offenbart eine Solarmodul-Ständerkonstruktion und ein Verfahren zu deren Montage.

Die US 2009/113822 A1 offenbart ein photovoltaisches Membransystem zur Verwendung auf einem Gebäude.

Aufgrund der Probleme und Unzulänglichkeiten bei den bekannten Halterungen und Verfahren zu deren Montage wurde die Solartechnik bislang insbesondere auf Flachdächern nur wenig eingesetzt.

Es ist daher Gegenstand der vorliegenden Offenbarung, eine Halte- und Befestigungsvorrichtung der eingangs genannten Art anzugeben, die unter Vermeidung der Nachteile des Standes der Technik eine einfache und sichere Anbringung von Solarmodulen und/oder Sonnenkollektoren auch an Flachdächern unter Schonung der Dachstruktur und ohne Beeinträchtigung der Dichtigkeit des Daches ermöglicht. Es ist ferner Aufgabe der vorliegenden Erfindung, ein Verfahren der eingangs genannten Art anzugeben, mit welchem sich die eingangs genannten Halte- und Befestigungsvorrichtungen sicher und schonend für die Dachstruktur, ohne Beeinträchtigung der Dichtigkeit des Daches auch an Flachdächern befestigen lassen.

Bei einer gattungsgemäßen Halte- und Befestigungsvorrichtung ist vorgesehen, dass die Befestigungsmittel mindestens einen flächigen Auflageabschnitt mit einer Auflagefläche zur planparallelen Auflage auf die Dachfläche aufweisen. Gemäß der vorliegenden Offenbarung ermöglicht der Auflageabschnitt eine Befestigung der Halte- und Befestigungsvorrichtung durch Verkleben, Verschweißen oder auch durch Magnetismus oder ähnliches. In all diesen Fällen ermöglicht die Auflagefläche eine Verbindung mit der Dachfläche ohne jegliche Beeinträchtigung von deren Dichtigkeit. Auch kommt es bei den offenbarten Befestigungsformen nicht auf ein hohes Eigengewicht der Halte- und Befestigungsvorrichtung an, so dass auch eine Leichtbauweise gewählt werden kann, um so die Dachbelastung auf ein Minimum zu reduzieren. Die Auflageabschnitte können die Form von Laschen haben, die sich senkrecht über die Halterung der Befestigungsvorrichtung hinaus an deren Unterseite erstrecken.

In vorteilhafter Ausgestaltung der Offenbarung sind die Auflagefläche zum Herstellen einer Haftverbindung mit der Dachfläche ausgebildet. Beispielsweise kann die Auflagefläche eine Oberflächenstruktur aufweisen, die eine Herstellung einer Klebeverbindung zwischen der Auflagefläche und der Dachfläche ermöglicht. Die Befestigung der Halte-und Befestigungsvorrichtung erfolgt gemäß dieser Ausgestaltung der Offenbarung durch die Haftverbindung zwischen der Auflagefläche und der Dachfläche bei geeigneter Wahl eines Klebemittels.

In anderer vorteilhafter Ausgestaltung der Offenbarung ist eine den Auflageabschnitt flächenmäßig überragende Befestigungsauflage zum Herstellen einer den Auflageabschnitt im Wesentlichen überdeckenden Haftverbindung mit der Dachfläche vorgesehen. Gemäß dieser Ausgestaltung der Offenbarung wird somit ein beispielsweise flaschenartig ausgestalteter Auflageabschnitt nicht direkt mit der Dachfläche beispielsweise verklebt. Stattdessen wird der Auflageabschnitt mit einer insbesondere flexiblen Auflagebahn überdeckt, wobei eine Haftverbindung nur zwischen der Befestigungsauflage der Dachfläche erfolgt. Dabei wird gemäß der vorliegenden Offenbarung der Auflageabschnitt und damit die Halte- und Befestigungsvorrichtung unter der Befestigungsauflage eingeklemmt und auf diese Weise befestigt. Von der Haftverbindung ist im Rahmen der Offenbarung auch jede Form der Klebeverbindung oder auch Schweißverbindung zu verstehen.

In besonders günstiger Ausgestaltung der Offenbarung ist die Befestigungsauflage als Dachpappe, insbesondere Bitumen-Dachbahnen, ausgestaltet. Dachpappe befindet sich häufig auf Flachdächern und anderen Dächern, so dass eine Verbindung durch Verschweißen einer zusätzlichen Dachpappe der offenbarten Halte- und Befestigungsvorrichtung mit der vorhandenen Dachpappe auf der Dachfläche problemlos möglich ist Die Verbindung ist bestens geeignet für die Witterungsverhältnisse auf dem Dach. Mit Vorteil kann eine sehr hohe Standzeit gewährleistet werden.

Eine spezielle Ausgestaltung der Offenbarung sieht vor, dass die Mittel zur Halterung zwei voneinander parallel beabstandet angeordnete, insbesondere längliche und/oder plattenartige Trageelemente mit jeweils einer Aufnahmefläche zur Aufnahme des Photovoltaikmoduls und/oder Sonnenkollektormoduls in einem Abstand über der Dachfläche umfassen, wobei die Aufnahmefläche eines Trageelements vorzugsweise in einem anderen Abschnitt anordenbar ist als die Aufnahmefläche des anderen Trageelements. Durch den Aufbau der Halterungen mittels zweier separater Halterungen kann das Photovoltaikmodul oder das Sonnenkollektor beispielsweise an der oberen- und unteren Kante aufgelegt werden. Die Beabstandung der beiden Halterungen ermöglicht die Anbringung von beispielsweise Befestigungslaschen als Befestigungsmittel an jeder der beiden Einzelhalterungen, um die Verbindung mit der Dachfläche in der offenbarten Weise sicher zu stellen. Beispielsweise können Bitumenbahnen somit auch zwischen die beiden Einzelhalterungen gebracht werden, um die Auflageabschnitte an der Dachfläche zu fixieren. Die Ausgestaltung der Einzelhalterungen mit unterschiedlich hohen Aufnahmeflächen führt zu einer Halterung des Solarmoduls, wie häufig zur Optimierung der Effizienz entsprechend des Sonneneinstands gewünscht.

In anderer bevorzugter Ausgestaltung der Offenbarung können die Aufnahmeflächen mit einer Auskleidung aus einem schwingungsdämpfenden Material versehen sein. Insbesondere kann ein Elastcmerstreifen bzw. sogenanntes Moosgummi aufgeklebt werden, um Geräusche, wie zum Beispiel Klappern zu verhindern. Ferner können durch diese Maßnahme etwaige unterschiedliche Ausdehnungen bei Temperaturwechsel kompensiert werden.

Die Stabilität wird noch verbessert, wenn in vorteilhafter Ausgestaltung der Offenbarung die Trageelemente mittels mindestens eines im Wesentlichen quer zu den Trageelementen angeordneten, vorzugsweise plattenartigen, Stabilationselements miteinander verbunden sind. Bei verwendeten unterschiedlich hohen Tragelementen zur abgewinkelten Halterung des Solarmoduls kann das Stabilationselement die Form einer dreieckigen Platte haben. Bei gleichzeitiger Verwendung von aufrechten Profilplatten als Trageelemente kann eine im Wesentlichen nach allen Seiten winddichte abgeschlossene Struktur erzeugt werden. Dies vermindert die Windangriffsmöglichkeiten und erhöht somit mit Vorteil die Stabilität zusätzlich.

Wenn mindestens ein Trageelement oder mindestens ein Stabilisationselement mit einer Lüftungsöffnung versehen ist, kann eine Kühlung des Raumes unterhalb des Solarmoduls sichergestellt werden.

Eine besonders sturmsichere Variante der Offenbarung erhält man, wenn mindestens ein Trageelement mit Anschlussmitteln zum Befestigen an mindestens einem Trageelement einer weiteren Halte- und Befestigungsvorrichtung versehen ist. Es lässt sich auf diese Weise mit Vorteil die Halte- und Befestigungsvorrichtung aus einer Vielzahl von Einzelmodulen aufbauen, die untereinander fest miteinander verbunden werden. Man erhält entsprechend eine einzelne zusammenhängende Struktur aus mehreren starr miteinander verbundenen Einzelmodulen. Die Sturmsicherheit verbessert sich hierdurch wesentlich. Außerdem ist die Montage mit Vorteil besonders bequem und kann mit geringerem Personaleinsatz ohne aufwändige Kran- oder Hebevorrichtung realisiert werden, denn die Einzelmodule können klein und leicht sein und die Gesamtstruktur entsteht erst vor Ort bei der Montage auf dem Dach. Die Herstellung gestaltet sich gemäß einer bevorzugten Variante besonders kostengünstig, wenn die Halte- und Befestigungsvorrichtung im Wesentlichen aus Stanzteilen, insbesondere aus einem Leichtmetall, vorzugsweise Aluminium, aufgebaut ist. Insbesondere können Aluminiumplatten mit einer Stärke von lediglich 1,5 mm verwendet werden. Die Halterungen und Stabilisationselemente können gemäß dieser Ausführungsvariante Stanzteile sein, welche anschließend ein Winkelprofil aufgeprägt bekommen. So kann zum Beispiel der gemäß der Offenbarung vorgesehene Auflageabschnitt mit Auflagefläche als um 90 Grad abgewinkelter Teil der Aufnahmehalterung für das Solarmodul ausgestaltet sein.

Die Offenbarung betrifft außerdem eine Anordnung einer Anzahl von Halte- und Befestigungsvorrichtungen nach der vorhergehenden Offenbarung, wobei mehrere, insbesondere alle, Halte- und Befestigungsvorrichtungen untereinander mittels der Anschlussmittel an einem benachbarten Trageelement einer weiteren Halte- und Befestigungsvorrichtung befestigt sind.
Die der vorliegenden Erfindung zu Grunde liegende Aufgabe wird gelöst durch das Verfahren der eingangs genannten Art, mit den zusätzlichen Merkmalen des kennzeichnenden Teils des Patentanspruchs 1, wobei die Halt- und Befestigungsvorrichtung gemäß der vorhergehenden Offenbarung ausgestaltet ist und mit dem flächigen Auflageabschnitt planparallel auf die Dachfläche aufgelegt wird, wobei anschließend eine den Auflageabschnitt flächenmäßig überragende Befestigungsauflage über den Auflageabschnitt gelegt wird und schließlich eine Haftverbindung zwischen der Befestigungsauflage und der Dachfläche derart hergestellt wird, dass der Auflageabschnitt durch die Befestigungsauflage an die Dachfläche gepresst wird. Insbesondere ist erfindungsgemäß der Auflageabschnitt als Bitumenbahn ausgestaltet, welche auf die Bitumenbahnen des Flachdachs geschweißt und/oder mit diesen verklebt wird. Dabei werden die Auflageabschnitte, die zum Beispiel laschenartig ausgestaltet sein können, fest mit dem Dach verbunden.
Insbesondere kann in Ausgestaltung der Erfindung die Befestigungsauflage mit der Dachfläche verschweißt werden und/oder verklebt werden. Zur Verbesserung der Haftverbindung bzw. Schweißverbindung sieht eine bevorzugte Ausgestaltung des erfindungsgemäßen Verfahrens vor, dass vor Herstellung der Haftverbindung die Dachfläche, insbesondere durch Auftragen eines Anstrichs, vorzugsweise Bitumenanstrichs, vorbehandelt wird.
Eine Erhöhung der Arbeitsicherheit der Monteure bei der Montage ergibt sich gemäß einem Aspekt des erfindungsgemäßen Verfahrens, wonach nach dem Auflegen der Halte- und Befestigungsvorrichtung auf die Dachfläche mindestens eine weitere Halte- und Befestigungsvorrichtung auf die Dachfläche aufgelegt wird und an einer benachbarten Halte- und Befestigungsvorrichtung befestigt wird, wobei anschließend die Auflageabschnitte der weiteren Halte- und Befestigungsvorrichtungen in entsprechender Weise mittels einer Befestigungsauflage an die Dachfläche gepresst werden. Es wird also vorgeschlagen, eine Solaranlage beispielsweise auf einen Flachdach in modularer Weise aufzubauen. Mit Vorteil können die Einzelmodule klein und leicht sein, was die Montage mit nur wenigen Monteuren, zum Beispiel zwei, ermöglicht. Die Verbindung der Einzelmodule untereinander erhöht die Stabilität der Gesamtstruktur und vermindert gleichzeitig deren Sturmanfälligkeit.

Insbesondere kann in anderer Ausgestaltung der Erfindung eine zusammenhängende Befestigungsauflage zur Befestigung mehrerer Auflageabschnitte verwendet werden. Zweckmäßig kann zum Beispiel eine Bitumenbahn am Stück ausgerollt werden, um mehrere Auflageabschnitte zu bedecken. Die Bitumenbahn wird dann in einem Arbeitsgang auf das Flachdach geschweißt, wobei zum Beispiel als Laschen ausgestaltete Befestigungsauflagen fest mit dem Dach verbunden werden. Die Haft- bzw. Schweißfläche zwischen der Befestigungsauflage und der Dachfläche erhöht sich zudem, was die Festigkeit der Verbindung noch erhöht.

Die Verbindung wird nachstehend in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit den selben Bezugszeichen versehen.
Die Figuren der Zeichnung zeigen im Einzelnen:
- Figur 1:: Perspektivische Ansicht einer Ausführungsform einer Halte- und Befestigungsvorrichtung gemäß der Offenbarung,
- Figur 2:: Detaildarstellung der Nordhalterung der Halte- und Befestigungsvorrichtung gemäß Figur 1 in Blickrichtung des Pfeils II in Figur 1;
- Figur 3:: Vertikalschnitt durch die Nordhalterung gemäß Figur 2 entlang der Schnittlinie III - III in Figur 2;
- Figur 4:: Vertikaler Schnitt durch die Südhalterung der Solarmodulhalterung gemäß Figur 1 entlang der Schnittlinie IV - IV in Figur 1;
- Figur 5:: Detaildarstellung des Bereichs V in Figur 1;
- Figur 6:: Darstellung eines Ensembles zweier hintereinander angeordneter Solarmodulhalterungen gemäß Figur 1.

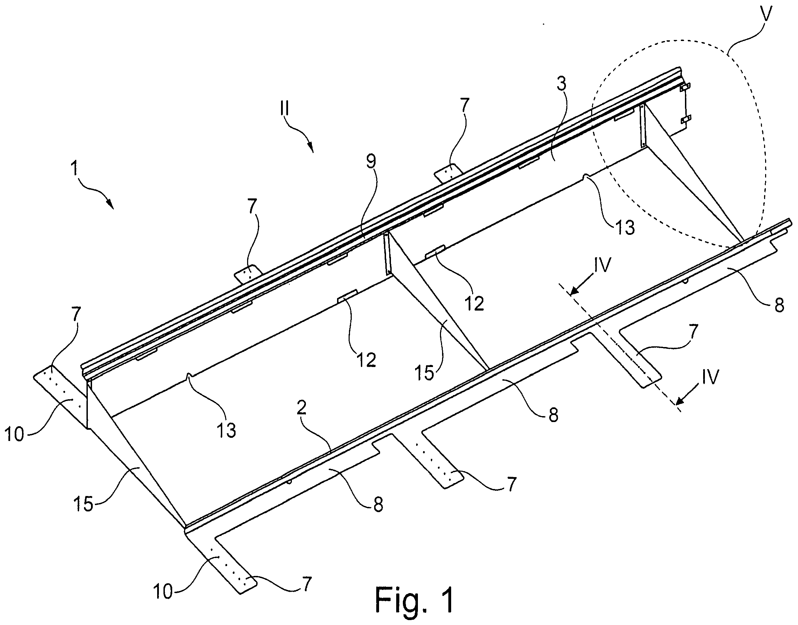

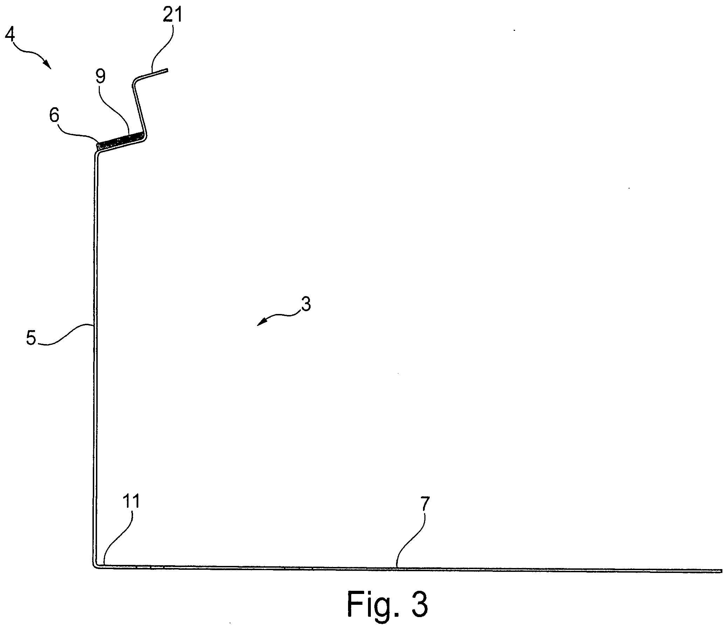

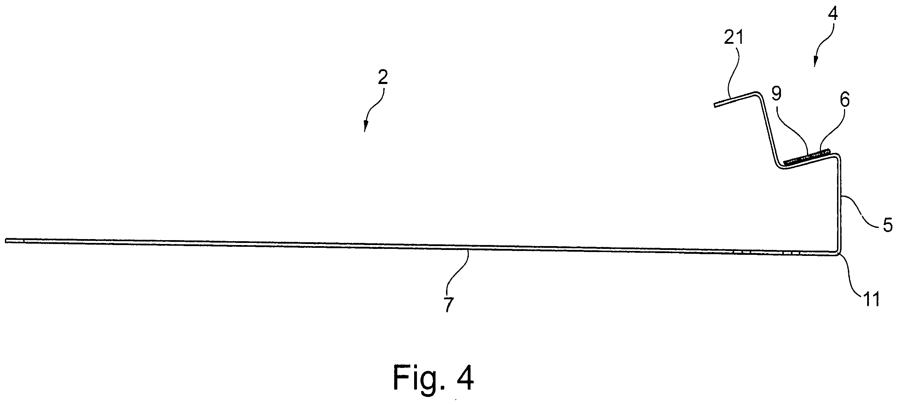

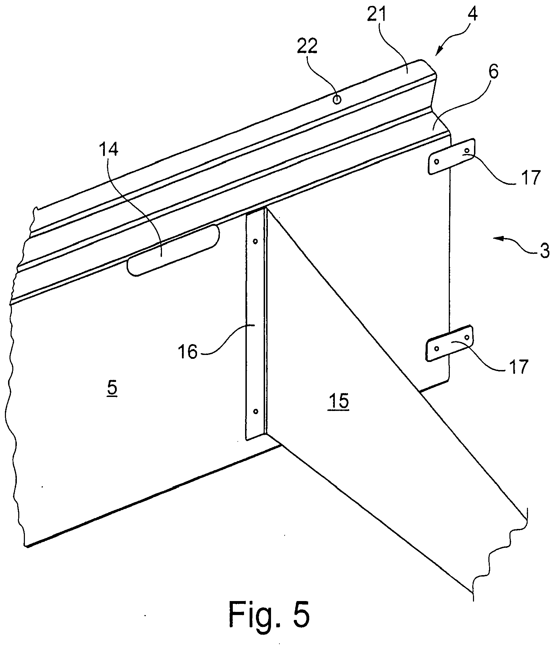

Figur 1 zeigt in perspektivischer Darstellung von schräg oben einen Solarmodulhalter 1 als Ausführungsbeispiel einer Halte- und Befestigungsvorrichtung gemäß der Offenbarung. Der Solarmodulhalter 1 besteht aus einer Südhalterung 2 und einer Nordhalterung 3. Die Südhalterung 2 ist in einem Abstand parallel versetzt zur Nordhalterung 3 angeordnet. Sowohl die Südhalterung 2 als auch die Nordhalterung 3 sind im Wesentlichen gleich aufgebaut Beide Halterungen 2, 3 bestehen aus einem Aluminiumprofilblech mit einer Wandstärke von 1,5 mm. Die Halterungen 2, 3 weisen jeweils am oberen Ende ein Aufnahmeprofil 4 zur Aufnahme eines in den Figuren nicht dargestellten rechteckigen Photovoltaik-Moduls mit einer Längskante auf. Dies ist in den Vertikalschnitten gemäß der Figuren 3 und 4 am besten zu erkennen. Die Halterungen 2, 3 weisen einen Vertikalabschnitt 5 auf, dessen Länge die Höhe des Aufnahmeprofils 4 bestimmt. Wie in den Figuren zu erkennen, ist das Aufnahmeprofil 4 der Nordhalterung 3 höher als das Aufnahmeprofil 4 der Südhalterung angeordnet. Das Aufnahmeprofil 4 hat jeweils die Form eines Doppelwinkels in der vertikalen Schnittansicht. Die Photovoltaik-Module oder auch Sonnenkollektor-Module werden auf einer Auflagefläche 6 des Aufnahmeprofils 4 der Halterungen 2, 3 des Solarmodulhalters 1 aufgelegt. Eine Befestigungsfläche 21 oberhalb der Auflagefläche jedes Doppelprofils 4 ist mit Bohrungen 22 versehen, wie in Figur 5 zu erkennen. Die Bohrungen 22 dienen zur Befestigung des Photovoltaik-Moduls oder Sonnenkollektor-Moduls anhand einer geeignet geformten Klammer, welche mit den Bohrungen 22 verschraubt wird.

Sowohl die Südhalterung 2 als auch die Nordhalterung 3 weisen an ihrem unteren, dem Aufnahmeprofil 4 entgegen gesetzten Abschnitt 3 Befestigungslaschen 7 auf. Die Befestigungslaschen 7 verlaufen in einem rechten Winkel zu den Vertikalabschnitten 5 der Halterungen 2, 3. In den Bereichen zwischen den Befestigungslaschen 7 befinden sich äußere Knickleisten 8. Die äußeren Knickleisten 8 haben dieselbe Orientierung wie die Befestigungslaschen 7. Jedoch ist deren Ausdehnung durch Ausstanzung bei der Herstellung wesentlich geringer als jene der Befestigungslaschen 7.

Die Auflageflächen 6 der Aufnahmeprofile der Halterungen 2, 3 sind mit einem Elastomerstreifen 9 bzw. Moosgummi beklebt, um Geräusche, wie z. B. Klappern, zu verhindern und ggf. unterschiedliche Materialausdehnungen bei Temperaturschwankungen zu kompensieren.

Dies ist für die Nordhalterung 3 insbesondere in Figur 3 und für die Südhalterung 2 insbesondere in Figur 4 zu erkennen.
Die Befestigungslaschen 7 sind mit einer Anzahl Bohrungen 10 versehen, die in den Figuren durch einen Punkt angedeutet sind.
Sowohl die Südhalterung 2 als auch die Nordhalterung 3 ist an ihrem Vertikalabschnitt 5 entlang der Knicklinie 11 mit mehreren Entwässerungsöffnungen 12 versehen. Außerdem sind in Vertikalabschnitt 5 entlang der Knicklinie 11 jeweils Kabeldurchführungen 13 ausgeformt. Im oberen Bereich des Vertikalabschnitts 5 der Halterungen 2, 3 sind im Bereich des Aufnahmeprofils 4 Be- und Entlüftungsöffnungen 14 ausgeformt. Dies ist besonders gut in Figur 5 zu erkennen. Figur 5 veranschaulicht ferner.
Die Südhalterung 2 ist mit der Nardhalterung 3 über drei Stabilisatoren 15 verbunden. Jeder Stabilisator 15 besteht aus einem Stanzblech in Form eines rechtwinkligen Dreiecks, wobei an den Enden Befestigungslaschen 16 zur Befestigung am Vertikalabschnitt 5 der Südhalterung 2 bzw. Nordhalterung 3 vorhanden sind. Die Stabilisatoren 15 sind im rechten Winkel zu der Südhalterung 2 und der Nordhalterung 3 angeordnet. Sowohl die Südhalterung 2 als auch die Nordhalterung 3 ist an jedem seitlichen Ende des Vertikalabschnitts 5 mit Anschlußmitteln 17 versehen zum Verbinden mit einem seitlich daran anschließenden gleichartig aufgebauten Solarmodulhalter.
Die Stabilisatoren 15 sind an der Südhalterung 2 bzw. an der Nordhalterung 3 im Bereich der Befestigungslaschen 16 mit Blindnieten befestigt. Zur Anbringung der Blindnieten sind jeweils geeignete Bohrungen in den zu verbindenden Bauteilen vorgesehen. Um die Stabilisatoren 15 in unterschiedlichen Positionen mit den Halterungen 2, 3 vernieten zu können, sind entsprechende Bohrungen in unterschiedlichen Positionen der Halterungen 2, 3 vorgesehen.
Zum Befestigen des Solarmodulhalters 1 an einer Dachfläche eines Flachdachs wird über die Befestigungslaschen 7 und äußeren Knickleisten 8 sowohl der Südhalterung 2 als auch der Nordhalterung 3 eine Bitumenbahn 18 aufgelegt. In Figur 1 ist die Bitumenbahn 18 der Übersichtlichkeit halber nicht gezeigt.

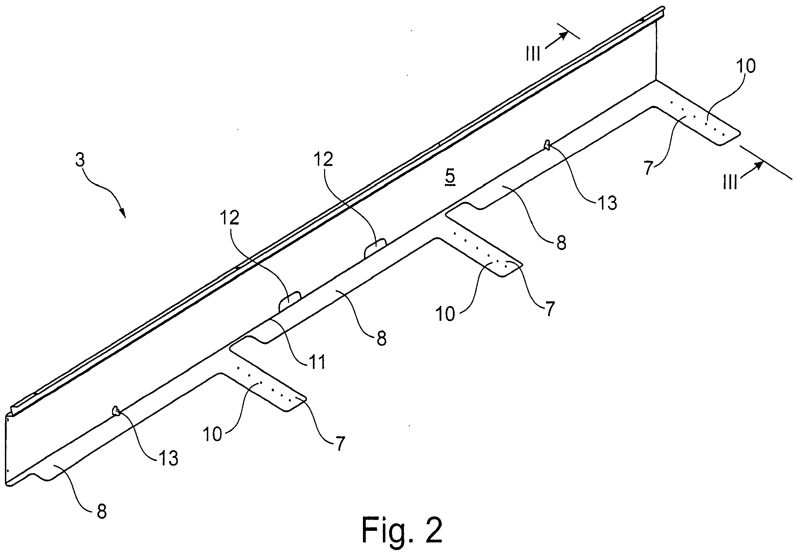

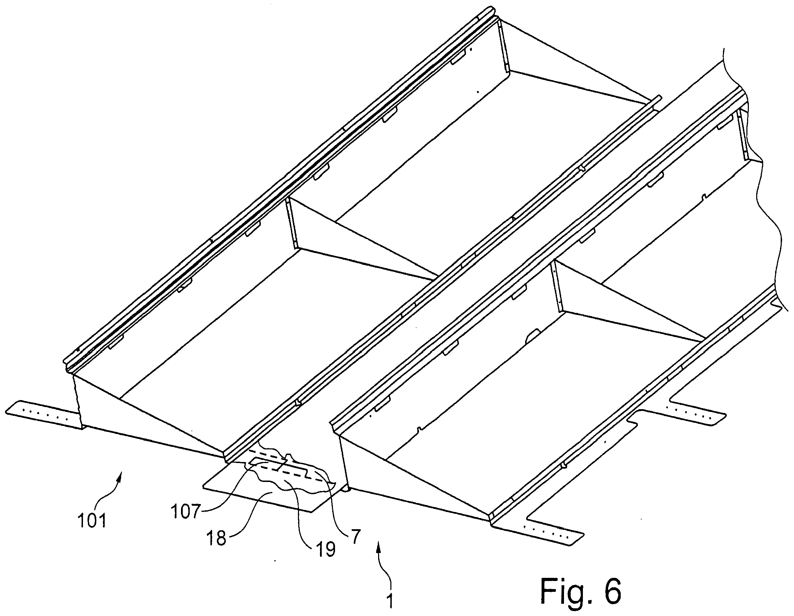

Figur 6 zeigt eine Anordnung bestehend aus dem Solarmodulhalter 1 gemäß den Figuren 1 bis 5 und einem weiteren Solarmodulhalter 101, welcher parallel versetzt hinter dem Solarmodulhalter 1 angeordnet ist. Der Solarmodulhalter 101 ist im wesentlichen baugleich mit dem Solarmodulhalter 1. Weiter ist in Figur 6 die Bitumenbahn 18 zu erkennen, welche auf die Befestigungslaschen 7 aufgebracht ist.
In der Figur 6 ist ferner durch einen Aufrissbereich 19 zeichnerisch veranschaulicht, wie die Befestigungslasche 7 der Nordhalterung 3 des Solarmodulhalters 1 über die Befestigungslasche 107 des Solarmodulhalters 101 gelegt ist, um einen Überlapphereich zu bilden. Im Überlappbereich ist die Befestigungslasche 7 mit der Befestigungslasche 107 durch Blindnieten durch die Bohrungen 10 verbunden. Auf diese Weise sind der Solarmodulhalter 1 und der Solarmodulhalter 101 miteinander verbunden. Die Blindnietverbindung besteht in entsprechender Weise für jedes Paar von überlappenden Befestigungslaschen 7, 107.
In den Figuren nicht dargestellt kann gleichermaßen im Rahmen der Erfindung eine Befestigungslasche 7 in den Bereich zwischen Südhalterung 2 und Nordhalterung 3 ein und desselben Solarmodulhalters 1 hineinragen und dort mit einer Bitumenbahn 18 überdeckt sein.

Zur erfindungsgemäßen Montage des Solarmodulhalters 1 werden im wesentlichen drei Montagephasen angewendet. Diese können entweder leicht zeitversetzt und im wesentlichen parallel abgearbeitet werden oder sequentiell nacheinander.
Zunächst wird an der Südseite eines Flachdachs begonnen, eine Reihe von Südhaltern 2 anhand der Anschlußmittel 17 miteinander zu verbinden mittels Blindnietung. Die miteinander verbundenen Südhalter 2 werden dabei exakt in der gewünschten Orientierung zur Sonne ausgerichtet. Anschließend werden die Stabilisatoren 15 mittels Blindnieten an die Südhalterungen 2 montiert und im nächsten Schritt werden die Nordhalter 3 an die Stabilisatoren 15 angenietet. Außerdem werden die nebeneinander angeordneten Nordhalterungen 3 untereinander mit jeweils zwei Anschlußmitteln 17 zusammengenietet. Jeder Solarmodulhalter wird mit drei Stabilisatoren 15 montiert, von denen zwei am Rand und einer in der Mitte angeordnet ist. Die Befestigungslaschen 7 der darauf folgenden Südhalterung 2 des sich nach hinten anschließenden Solarmodulhalters 101 werden auf der Dachfläche mit den Befestigungslaschen 7 des Solarmodulhalters 1 angenietet.
In der zweiten Montagephase wird in dem Zwischenraum zwischen dem ersten Solarmodulhalter 1 und dem zweiten Solarmodulhalter 101 eine Bitumenbahn aufgelegt und auf das Flachdach geschweißt. Dabei werden die Befestigungslaschen 7 der Halterungen 2, 3 incl. der äußeren Knickleisten 8 fest mit der Dachfläche verbunden. Diese beiden Montagephasen werden mit weiteren Solarmodulhalteeinheiten durchgeführt. In einer dritten und letzten Phase der Montage werden die Solarmodule angelegt und montiert. Dies kann erfolgen, wenn die erste Solarmodulhalterreihe mit dem Dach verschweißt wurde. Es können aber auch zunächst alle Solarmodulhalterungen auf dem Dach verschweißt werden und anschließend in einem Arbeitsgang alle Solarmodule eingesetzt werden.

Insbesondere bei der erfindungsgemäßen Montage des Solarmodulhalters 1, 101 auf älteren Dächern kann zur Vorbehandlung die Dachfläche mit einem Bitumenanstrich versehen werden, der als Haftvermittler fungiert. Auf diese Weise sind eine Solarmodulhalterung und ein Verfahren zu deren Montage auf einer Dachfläche, insbesondere Flachdachfläche offenbart, welche eine Beschädigung des Dachs vollständig vermeiden. Ferner wird auch eine Beaufschlagung der Dachkonstruktion mit einer hohen Masse weitestgehend vermieden, da die Aufbauten aus Leichtmetall, insbesondere Aluminium-Stanzplatten bestehen und somit eine geringe Masse aufweisen.

## Patentansprüche

1. Verfahren zur Montage einer Anordnung einer Anzahl von Halte-und Befestigungsvorrichtungen (1, 101) für mindestens ein Photovoltaikmodul und/oder für mindestens ein in einer zum bestimmungsgemäßen Gebrauch geeigneten Ausrichtung auf einer Dachfläche, wobei Jede Halte- und Befestigungsvorrichtung (1, 101) mit Mitteln zur Halterung mindestens eines Photovoltaikmoduls und/oder Sonnenkollektormoduls in einer zum bestimmungsgemäßen Gebrauch geeigneten Ausrichtung und mit Befestigungsmitteln zur Befestigung auf einer Dachfläche, versehen ist, wobei die Befestigungsmittel mindestens einen flächigen Auflageabschnitt mit einer Auflagefläche zur planparallelen Auflage auf die Dachfläche aufweisen, wobei die Auflagefläche zum Herstellen einer Haftverbindung mit der Dachfläche ausgebildet ist, wobei eine den Auflageabschnitt flächenmäßig überragende Befestigungsauflage zum Herstellen einer den Auflageabschnitt vollständig überdeckenden Haftverbindung mit der Dachfläche vorgesehen ist, wobei die Befestigungsauflage als Dachpappe, insbesondere Bitumenbahn (18), ausgestaltet ist, wobei die Mittel zur Halterung Trageelemente mit Anschlussmitteln aufweisen, wobei bei der Anordnung mehreren, insbesondere alle, Halte-und Befestigungsvorrichtungen (1, 101) untereinander mittels der Anschlussmittel an einem benachbarten Trageelement einer weiteren Halte- und Befestigungsvorrichtung (1, 101) befestigt sind, **dadurch gekennzeichnet, dass** die Montage drei Montagephase umfasst, wobei in einer ersten, vorzugsweise auf dem Dach ausgeführten, Montagephase die Anordnung montiert und mit dem flächigen Auflageabschnitt planparallel auf die Dachfläche aufgelegt wird, anschließend in einer zweiten Montagephase in einem Zwischenraum zwischen benachbarten Halte- und Befestigungsvorrichtungen (1, 101) der Anordnung eine den Auflageabschnitt flächenmäßig überragende Befestigungsauflage über den Auflageabschnitt gelegt wird und schließlich eine Haftverbindung zwischen der Befestigungsauflage und der Dachfläche, derart hergestellt wird, class der Auflageabschnitt durch die Befestigungsauflage an die Dachfläche, gepresst wird, wobei nach dem Auflegen der Halte- und Befestigungsvorrichtung (1, 101) auf die Dachfläche mindestens eine weitere Halte- und Befestigungsvorrichtung auf die Dachfläche aufgelegt wird und an einer benachbarten Halte- und Befestigungsvorrichtung (1, 101) befestigt wird, wobei anschließend die Auflageabschnitte der weiteren Halte- und Befestigungsvorrichtungen (1, 101) in entsprechender Weise mittels einer Befestigungsauflage an die Dachfläche gepresst werden, und wobei nach Abschluss der zweiten Montagephase in einer dritten Montagephase die Photovoltalkmodule und/oder Sonnenkollektormodule angelegt und montiert werden.

2. Verfahren nach Anspruch 1, **dadurch gekennzeichnet, dass** die Befestigungsauflage mit der Dachfläche verschweißt und/oder verklebt wird.

3. Verfahren nach Anspruch 1 oder 2, **dadurch gekennzeichnet,** das vor Herstellung der Haftverbindung die Dachfläche, insbesondere durch Auftragen eines Anstrichs, vorzugsweise Bitumenanstrichs, vorbehandelt wird.

4. Verfahren nach einem der Ansprüche 1 bis 3, **dadurch gekennzeichnet, dass** eine zusammenhänge Befestigungsauflage zur Befestigung mehrerer Auflageabschnitte verwendet wird.

5. Verfahren nach einem der Ansprüche 1 bis 4, **dadurch gekennzeichnet, dass** bei der Halte- und Befestigungsvorrichtung (1, 101) die Mittel zur Halterung zwei voneinander parallel beabstandet angeordnete, insbesondere längliche und/oder plattenartige, Trageelemente mit jeweils einer Aufnahmefläche (6) zur Aufnahme des Photovoltaikmoduls und/oder Sonnenkollektormoduls in einem Abstand über der Dachfläche umfassen, wobei die Aufnahmefläche (6) eines Trageelements vorzugsweise in einem anderen Abstand über der Dachfläche anordenbar ist als die Aufnahmefläche (6) des anderen Trageelements.

6. Verfahren nach einem der Ansprüche 1 bis 5, **dadurch gekennzeichnet, dass** bei der Halte- und Befestigungsvorrichtung (1, 101) die Aufnahmeflächen (6) mit einer Auskleidung (9) aus einem schwingungsdämpfenden Material versehen sind.

7. Verfahren nach einem der Ansprüche 1 bis 6, **dadurch gekennzeichnet, dass** bei der Halte- und Befestigungsvorrichtung (1, 101) die Trageelemente mittels mindestens eines im wesentlichen quer zu den Trageelementen angeordneten, vorzugsweise plattenartigen, Stabilisationselements (15) miteinander verbunden sind.

8. Verfahren nach einem der Ansprüche 1 bis 7, **dadurch gekennzeichnet, dass** bei der Halte- und Befestigungsvorrichtung (1, 101) mindestens ein Trageelement und/oder mindestens ein Stabilisationselement (15) mit einer Lüftungsöffnung (14) versehen ist.

9. Verfahren nach einem der Ansprüche 1 bis 8, **dadurch gekennzeichnet, dass** bei der Halte- und Befestigungsvorrichtung (1, 101) mindestens ein Trageelement mit Anschlußmitteln (17) zum Befestigen an mindestens einem Trageelement einer weiteren Halte- und Befestigungsvorrichtung versehen ist.

10. Verfahren nach einem der Ansprüche 1 bis 9, **dadurch gekennzeichnet, dass** die Halte- und Befestigungsvorrichtung (1, 101) im wesentlichen aus Stanzteilen, insbesondere aus einem Leichtmetall, vorzugsweise Aluminium, aufgebaut ist.

## Claims

1. Method for mounting an assembly of a number of holding and attachment devices (1, 101) for at least one photovoltaic module and/or solar collector module in an orientation suitable for the intended use on a roof area, each holding and attachment device (1, 101) being provided with means for holding at least one photovoltaic module and/or solar collector module in an orientation suitable for the intended use and with attachment means for attaching to a roof area, the attachment means comprising at least one planar contact portion having a contact surface for plane-parallel contact on the roof area, the contact surface being designed to produce an adhesive bond to the roof area, an attachment layer being provided which projects over the surface of the contact portion and is intended for producing an adhesive bond to the roof area, which adhesive bond completely covers the contact portion, the attachment layer being in the form of roofing felt, in particular bitumen sheeting (18), the holding means comprising support elements having connection means, in the assembly a plurality, in particular all, of the holding and attachment devices (1, 101) being interconnected by means of the connection means on an adjacent support element of an additional holding and attachment device (1, 101), **characterised in that** the mounting includes three mounting phases, in a first mounting phase, preferably carried out on the roof, the assembly being mounted and placed on the roof area in a plan-parallel manner by means of the planar contact portion, then in a second mounting phase, in a gap between adjacent holding and attachment devices (1, 101) of the assembly, an attachment layer that projects over the surface of the contact portion being placed over the contact portion, and finally an adhesive bond being produced between the attachment layer and the roof area such that the contact portion is pressed onto the roof area by the attachment layer, at least one additional holding and attachment device being placed on the roof area after the holding and attachment device (1, 101) has been placed on the roof area and being attached to an adjacent holding and attachment device (1, 101), then the contact portion of the additional holding and attachment devices (1, 101) being pressed onto the roof area in a similar manner by means of an attachment layer, and, once the second mounting phase is complete, in a third mounting phase the photovoltaic module and/or solar collector module being positioned and mounted.

2. Method according to claim 1, **characterised in that** the attachment layer is bonded and/or glued to the roof area.

3. Method according to either claim 1 or claim 2, **characterised in that**, prior to the production of the adhesive bond, the roof area is pre-treated, in particular by applying a coating, preferably a bitumen coating.

4. Method according to any of claims 1 to 3, **characterised in that** a continuous attachment layer is used for attaching a plurality of contact portions.

5. Method according to any of claims 1 to 4, **characterised in that**, in the holding and attachment device (1, 101), the holding means comprise two support elements that are spaced apart in parallel with one another, are in particular elongate and/or plate-like, and have in each case a receiving surface (6) for receiving the photovoltaic module and/or solar collector module at a distance above the roof area, it being possible for the receiving surface (6) of one support element to be preferably arranged at a different distance above the roof area from the receiving surface (6) of the other support element.

6. Method according to any of claims 1 to 5, **characterised in that**, in the holding and attachment device (1, 101), the receiving surfaces (6) are provided with a lining (9) made of a vibration-damping material.

7. Method according to any of claims 1 to 6, **characterised in that**, in the holding and attachment device (1, 101), the support elements are interconnected by means of at least one preferably plate-like stabilisation element (15) that is arranged substantially transversely to the support elements.

8. Method according to any of claims 1 to 7, **characterised in that**, in the holding and attachment device (1, 101), at least one support element and/or at least one stabilisation element (15) is provided with a vent (14).

9. Method according to any of claims 1 to 8, **characterised in that**, in the holding and attachment device (1, 101), at least one support element is provided with connection means (17) for attaching to at least one support element of an additional holding and attachment device.

10. Method according to any of claims 1 to 9, **characterised in that** the holding and attachment device (1, 101) is constructed substantially of stamped metal parts, in particular of a light metal, preferably aluminium.

## Revendications

1. Procédé servant à monter un ensemble d'un ensemble comprenant une pluralité de dispositifs de maintien et de fixation (1. 101) sur une surface de toit, selon une orientation adaptée aux fins de l'utilisation conforme à l'usage prévu, pour au moins un module photovoltaïque et/ou un module collecteur solaire, dans lequel chaque dispositif de maintien et de fixation (1, 101) est pourvu de moyens servant au maintien d'au moins un module photovoltaïque et/ou d'un module collecteur solaire selon une orientation adaptée aux fins de l'utilisation conforme à l'usage prévu et est pourvu de moyens de fixations servant à la fixation sur une surface de toit, dans lequel les moyens de fixation présentent au moins une section de support plane avec une surface de support servant au support selon une direction parallèle à la surface sur la surface de toit, dans lequel la surface de support est réalisée afin d'établir une liaison adhésive avec la surface de toit, dans lequel un support de fixation dépassant la section de support sur la surface est prévu afin d'établir une liaison adhésive recouvrant complètement la section de support avec la surface de toit, dans lequel le support de fixation est configuré sous la forme d'un carton goudronné, en particulier sous la forme d'une bande de bitume (18), dans lequel les moyens de maintien présentent des éléments porteurs avec des moyens de raccordement, dans lequel, concernant l'ensemble, plusieurs, en particulier tous les dispositifs de maintien et de fixation (1, 101) sont fixés les uns aux autres au moyen des moyens de raccordement au niveau d'un élément porteur adjacent d'un autre dispositif de maintien et de fixation (1, 101), **caractérisé en ce que** le montage comprend trois phases de montage, dans lequel lors d'une première phase de montage, exécutée de préférence sur le toit, l'ensemble est monté et est posé sur la surface de toit de manière parallèle à la surface par l'intermédiaire de la section de support sur la surface, lors d'une deuxième phase de montage, qui suit immédiatement après, un support de fixation dépassant de la section de support est placé par l'intermédiaire de la section de support dans un espace intermédiaire entre des dispositifs de maintien et de fixation (1, 101) adjacents de l'ensemble et, pour finir, une liaison adhésive est établie entre le support de fixation et la surface de toit de telle manière que la section de support est pressée par le support de fixation au niveau de la surface de toit, dans lequel après la pose du dispositif de maintien et de fixation (1, 101) sur la surface de toit, au moins un autre dispositif de maintien et de fixation est posé sur la surface de toit et est fixé au niveau d'un dispositif de maintien et de fixation (1, 101) adjacent, dans lequel les sections de support des autres dispositifs de maintien et de fixation (1, 101) sont pressées immédiatement après de manière correspondante au moyen d'un support de fixation au niveau de la surface de toit, et dans lequel à l'issue de la deuxième phase de montage, lors d'une troisième phase de montage, les modules photovoltaïques et/ou les modules collecteurs solaires sont placés et montés.

2. Procédé selon la revendication 1, **caractérisé en ce que** le support de fixation est soudé et/ou collé à la surface de toit.

3. Procédé selon la revendication 1 ou 2, **caractérisé en ce qu'**avant l'établissement de la liaison adhésive, la surface de toit est traitée au préalable, en particulier par l'application d'un enduit, de préférence d'un enduit de bitume.

4. Procédé selon l'une quelconque des revendications 1 à 3, **caractérisé en ce qu'**un support de fixation continu est utilisé aux fins de la fixation de plusieurs sections de support.

5. Procédé selon l'une quelconque des revendications 1 4, **caractérisé en ce que**, concernant le dispositif de maintien et de fixation (1, 101), les moyens de maintien comprennent deux éléments porteurs disposés de manière espacée l'un de l'autre parallèlement, en particulier allongés et/ou en forme de plaque, avec respectivement une surface de réception (6) servant à recevoir le module photovoltaïque et/ou le module collecteur solaire à une distance donnée au-dessus de la surface de toit, dans lequel la surface de réception (6) d'un élément porteur peut être disposée de préférence à une distance donnée au-dessus de la surface de toit, autre que celle à la surface de réception (6) de l'autre élément porteur.

6. Procédé selon l'une quelconque des revendications 1 à 5, **caractérisé en ce que**, concernant le dispositif de maintien et de fixation (1, 101), les surfaces de réception (6) sont pourvues d'un revêtement (9) composé d'un matériau atténuant les oscillations.

7. Procédé selon l'une quelconque des revendications 1 à 6, **caractérisé en ce que** , concernant le dispositif de maintien et de fixation (1, 101), les éléments porteurs sont reliés les uns aux autres au moyen d'au moins un élément de stabilisation (15), de préférence en forme de plaque, disposé sensiblement de manière transversale par rapport aux éléments porteurs.

8. Procédé selon l'une quelconque des revendications 1 à 7, **caractérisé en ce que**, concernant le dispositif de maintien et de fixation (1, 101), au moins un élément porteur et/ou au moins un élément de stabilisation (15) est pourvu d'une ouverture d'aération (14).

9. Procédé selon l'une quelconque des revendications 1 à 8, **caractérisé en ce que**, concernant le dispositif de maintien et de fixation (1, 101), au moins un élément porteur est pourvu de moyens de raccordement (17) destinés à être fixés au niveau d'au moins un élément porteur d'un autre dispositif de maintien et de fixation.

10. Procédé selon l'une quelconque des revendications 1 à 9, **caractérisé en ce que** le dispositif de maintien et de fixation (1, 101) est élaboré sensiblement à partir de pièces estampées, en particulier à partir d'un métal léger, de préférence de l'aluminium.
